# EUROPÄISCHE PATENTSCHRIFT

(11) **EP 3 094 872 B1**
(45) Veröffentlichungstag und Bekanntmachung des Hinweises auf die Patenterteilung: **27.09.2017**
(21) Anmeldenummer: 15700238.7
(22) Anmeldetag: 13.01.2015
(51) Int. Cl.: F16C 32/06

(54) **HYDRODYNAMISCHES GLEITLAGER**
HYDRODYNAMIC PLAIN BEARING
PALIER LISSE HYDRODYNAMIQUE

(30) Priorität: 15.01.2014 DE 102014200593; 10.09.2014 DE 102014218107
(43) Veröffentlichungstag der Anmeldung: 23.11.2016
(73) Patentinhaber: Voith Patent GmbH, 89522 Heidenheim (DE)
(72) Erfinder: FUCHS, Andreas, 87459 Pfronten-Ried (DE)
(86) Internationale Anmeldenummer: PCT/EP2015/050496
(87) Internationale Veröffentlichungsnummer: WO 2015/107046

(56) Entgegenhaltungen:
- EP-A1- 1 025 938
- DE-A1-102011 005 467
- US-A- 3 743 367
- US-A1- 2010 166 347
- US-A1- 2011 200 422

## Beschreibung

Die vorliegende Erfindung betrifft ein hydrodynamisches Gleitlager mit einer Lagerschale, deren innere Oberfläche eine Lagerfläche für eine umlaufende Welle oder dergleichen bildet, wobei die Lagerfläche eine Vielzahl von in Umfangsrichtung der Lagerschale hintereinander angeordnete, voneinander getrennte Flächensegmente aufweist.

Solche hydrodynamische Gleitlager, wie sie die vorliegende Erfindung betrifft, sind gemäß einer vorteilhaften Ausführungsform als Lager mit Mehrkeilbohrung ausgeführt, bei welchem die Flächensegmente mit ihrem inneren Umfang jeweils ein Kreissegment mit einem Radius R ausbilden, wobei der Mittelpunkt des jeweiligen Kreissegments gegenüber einem Mittelpunkt der Lagerschale jeweils um eine Exzentrizität verschoben ist. Eine solche Verschiebung wird auch als Profilierung bezeichnet, die durch die Differenz des Radius R und eines Bezugsradius r, normiert auf den Bezugsradius definiert ist. Der Bezugsradius r ist beispielsweise der Radius eines theoretisch in die Lagerfläche eingepassten Kreisrings oder der Radius der äußeren Oberfläche der im Lager umlaufenden Welle.

Gattungsgemäße Lager sind beispielsweise als Lager mit Zweikeilbohrung ausgeführt, auch Zitronenspiellager genannt, oder als Lager mit Dreikeilbohrung oder Vierkeilbohrung. Ein Beispiel eines gattungsgemäßen Lagers zeigt US 3 743 367 A1. Herkömmliche Lager weisen den Nachteil, dass sie im Betrieb erheblichen thermischen und mechanischen Belastungen unterliegen, die zu einer verkürzten Lebensdauer führen können.

Der vorliegenden Erfindung liegt die Aufgabe zugrunde, ein hydrodynamisches Gleitlager der eingangs genannten Art anzugeben, dessen im Betrieb auftretende Belastung reduziert und dessen Lebensdauer verlängert ist.

Die erfindungsgemäße Aufgabe wird durch ein hydrodynamisches Gleitlager mit den Merkmalen von Anspruch 1 gelöst. In den abhängigen Ansprüchen sind vorteilhafte und besonders zweckmäßige Ausgestaltungen der Erfindung angegeben.

Ein erfindungsgemäßes hydrodynamisches Gleitlager weist eine Lagerschale auf, deren innere Oberfläche, wie eingangs dargelegt, eine Lagerfläche für eine umlaufende Welle oder dergleichen bildet. Anstelle einer umlaufenden Welle kann beispielsweise auch ein Zapfen eines anderen umlaufenden Bauteils innerhalb der Lagerschale gelagert sein. In der Regel ist die äußere Oberfläche des gelagerten Bauteils innerhalb der Lagerschale zylindrisch.

Erfindungsgemäß weist die Lagerfläche eine Vielzahl von in Umfangsrichtung der Lagerschale hintereinander angeordnete, voneinander getrennte Flächensegmente auf. Die Flächensegmente können dabei derart gestaltet und positioniert sein, dass sie ein sogenanntes Lager mit Mehrkeilbohrung bilden, wie eingangs dargelegt wurde.

Erfindungsgemäß ist nun zumindest die Lagerfläche oder vorteilhaft die gesamte Lagerschale aus CuCr1Zr hergestellt.

Durch die erfindungsgemäße Werkstoffwahl, insbesondere kombiniert mit den nachfolgend noch beschriebenen geometrischen Besonderheiten der Lagerschale, kann eine besonders hohe Wärmeabfuhr erreicht werden, was zu einer deutlichen Reduzierung der mechanischen Belastung des Lagers im Betrieb führt.

Besonders vorteilhaft beträgt der Anteil von Cr 0,5 bis 1,2 Gew.-%, der Anteil von Zr 0,03 bis 0,3 Gew.-%, gegebenenfalls sind Beimengungen anderer Stoffe von maximal 0,2 Gew.-% vorgesehen, und Cu bildet den restlichen Anteil der erfindungsgemäßen Legierung gemäß diesem Ausführungsbeispiel.

Günstig ist es, wenn zumindest die Lagerfläche oder die gesamte Lagerschale warmausgehärtet ist, im Gegensatz zu einem lösungsgeglühten Werkstoff.

Gemäß einer besonders vorteilhaften Ausführungsform weist zumindest die Lagerfläche oder die gesamte Lagerschale eine Wärmeleitfähigkeit von wenigstens 300 Watt pro Meter und Kelvin (W / (m * K)) auf, insbesondere bei einer Temperatur von 250 °C oder weniger.

Eine Ausführungsform sieht vor, dass die Lagerfläche wenigstens drei oder genau drei Flächensegmente aufweist, insbesondere mit verschiedenen Umfangswinkeln. Beispielsweise ist ein erstes Flächensegment vorgesehen, das einen Umfangswinkel von 170° bis 190°, insbesondere von 180° aufweist, ferner ein zweites Flächensegment, das einen Umfangswinkel von 110° bis 140°, insbesondere von 130° oder 120° aufweist, und ein drittes Flächensegment, das einen Umfangswinkel von 40° bis 70°, insbesondere von 50° oder 60° aufweist.

Günstig ist, wenn die beiden Flächensegmente mit dem vergleichsweise kleineren Umfangswinkel eine größere Profilierung als das verbleibende Flächensegment aufweisen, wobei die Profilierung dieser beiden Flächensegmente mit vergleichsweise kleinerem Umfangswinkel insbesondere gleich beziehungsweise identisch ist. Der Begriff der Profilierung ist dem Fachmann geläufig und wurde eingangs nochmals definiert.

Gemäß einer Ausführungsform ist in der Lagerfläche wenigstens eine sich in Umfangsrichtung erstreckende Ölnut vorgesehen, die insbesondere über nur einen Teil des Umfangs oder nur über den Umfang eines Flächensegments oder einen Teil des Umfangs eines Flächensegments reicht. Beispielsweise weist die wenigstens eine Ölnut eine Breite zwischen 20 und 30 Prozent einer Breite der Lagerfläche in Axialrichtung des Gleitlagers auf.

Gemäß einer Ausführungsform sind verschieden breite Ölnuten vorgesehen.

Günstig ist es, wenn über dem äußeren Umfang der Lagerschale ein Ringkanal zur Ölversorgung eingebracht ist, der über radiale Ölbohrungen in ölleitender Verbindung mit der Lagerfläche steht. Die Ölbohrungen können jedoch auch ohne einen entsprechenden Ringkanal vorgesehen sein.

Günstig ist, wenn die Mündung wenigstens einer Ölbohrung oder aller Ölbohrungen in der Lagerfläche jeweils durch eine in die Lagerfläche als Aussparung eingebrachte Schmiertasche umschlossen wird. Beispielsweise kann die Schmiertasche in Axialrichtung des Lagers breiter als die wenigstens eine Ölnut oder als alle Ölnuten sein. Insbesondere ist die wenigstens eine Schmiertasche zumindest breiter als die ihr in Drehrichtung der Welle gesehen vorgestellte Ölnut.

Eine Ausführungsform, die zu einem besonders hochbelastbaren Lager führt, sieht vor, dass eine Schmiertasche, die in Umfangsrichtung vor dem Flächensegment oder am Anfang des Flächensegments mit dem kleinsten Umfangswinkel positioniert ist, in Axialrichtung des Lagers breiter als alle anderen Schmiertaschen und insbesondere breiter als alle Ölnuten ist.

Durch die wenigstens eine Schmiernut oder durch andere Maßnahmen kann ein sogenannter Druckdamm ausgebildet sein, der aus der Lagerfläche nach innen hervorsteht und gegen das Öl beim Drehen der Welle in Drehrichtung strömt. Ein solcher Druckdamm ist insbesondere in der oben liegenden Lagerschale vorgesehen.

Die Lagerschale ist beispielsweise aus zwei Lagerschalenhälften zusammengefügt, die an einer Teilfuge aneinander gefügt sind. Die weniger belastete Lagerschalenhälfte, in der Regel die obere Lagerschalenhälfte, kann beispielweise stärker profiliert sein, insbesondere drei- bis fünfmal stärker profiliert sein, als die im Betrieb stärker belastete Lagerschalenhälfte, die in der Regel unten positioniert ist. Dabei muss die Teilfuge jedoch nicht in einer waagerechten Ebene verlaufen, sondern kann auch schräg hierzu stehen.

Gemäß einer vorteilhaften Ausführungsform der Erfindung ist in der Lagerschale wenigstens eine Kühlölbohrung vorgesehen, die sich zumindest teilweise in Axialrichtung der Lagerschale, das heißt parallel zur Drehachse der gelagerten Welle erstreckt. Auch eine Erstreckung winklig zur Drehachse, insbesondere sowohl in Axialrichtung als auch in Umfangsrichtung der Lagerschale und/oder in Axialrichtung und in Radialrichtung der Lagerschale oder in alle drei genannten Richtungen ist möglich. Vorteilhaft ist eine Vielzahl von entsprechenden Kühlölbohrungen vorgesehen. Beispielsweise verläuft die wenigstens eine Kühlölbohrung beziehungsweise die Vielzahl von Kühlölbohrungen jeweils ausgehend von dem Ringkanal über dem äußeren Umfang der Lagerschale zunächst radial oder zumindest teilweise radial nach innen und anschließend in Axialrichtung oder teilweise in Axialrichtung. Auch ist ausgehend von dem Ringkanal eine T-förmige Kühlölbohrung, die in zwei entgegengesetzte Axialrichtungen verläuft, für die eine oder die mehreren Kühlölbohrungen möglich. Besonders vorteilhaft ist eine solche Kühlölbohrung oder sind eine Vielzahl solcher Kühlölbohrungen über dem Umfangsabschnitt der Lagerschale vorgesehen, der die höchste Lagerlast trägt, beispielsweise im Bereich des zuvor beschriebenen dritten Flächensegments beziehungsweise im Übergang vom zweiten Flächensegment auf das dritte Flächensegment, das heißt am Ende des zweiten Flächensegments und am Anfang des dritten Flächensegments.

Die Erfindung soll nachfolgend anhand eines Ausführungsbeispiels und den Figuren exemplarisch beschrieben werden.

Es zeigen:
- Figur 1: eine exemplarische schräge Draufsicht auf ein erfindungsgemäßes hydrodynamisches Gleitlager;
- Figur 2: eine schematische teilweise geschnittene Ansicht auf die Lagerfläche des Lagers aus der Figur 1;
- Figur 3: eine schematische Darstellung der Flächensegmentierung der Lagerfläche des Lagers aus den Figuren 1 und 2;
- Figur 4: eine deutlich überhöht dargestellte schematische Ansicht des Versatzes der Flächensegmente relativ zum Mittelpunkt der Lagerschale;
- Figur 5: ein weiteres Ausführungsbeispiel eines erfindungsgemäßen hydrodynamischen Gleitlagers mit einer anderen Segmentaufteilung.

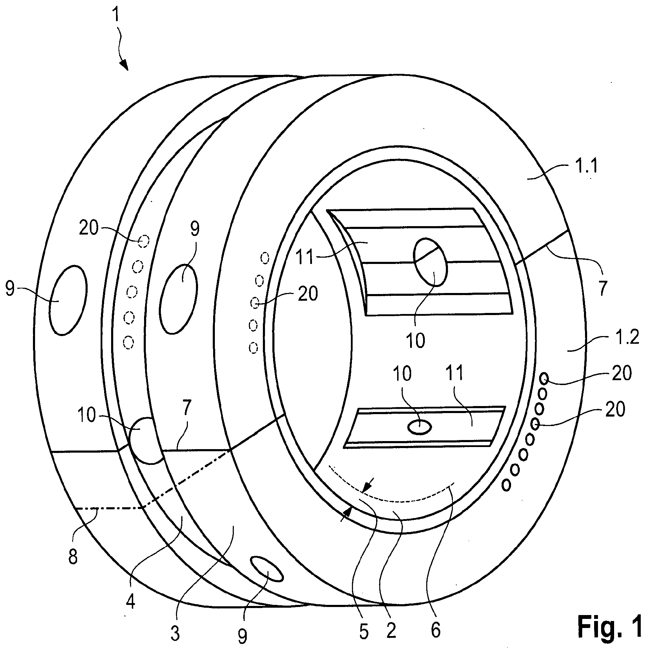

In der Figur 1 ist ein Ausführungsbeispiel für ein erfindungsgemäßes hydrodynamisches Gleitlager dargestellt, mit einer Lagerschale 1, die auf ihrem inneren Umfang eine Lagerfläche 2 ausbildet und einen hier im Wesentlichen zylindrischen äußeren Umfang 3 mit einem eingebrachten Ringkanal 4 zur Schmieröl- und/oder Kühlölversorgung des Lagerspaltes 5 aufweist, der zwischen der Lagerfläche 2 und dem äußeren Umfang einer hier nur schematisch angedeuteten Welle 6, die durch das hydrodynamische Gleitlager gelagert ist, ausgebildet ist.

Die Lagerschale 1 besteht im gezeigten Ausführungsbeispiel aus zwei Lagerschalenhälften 1.1, 1.2, die sich jeweils über 180° der Lagerfläche 2 beziehungsweise des äußeren Umfangs 3 erstrecken und an einer Teilfuge 7, die in einer Teilfugenebene 8 verläuft, zusammengefügt sind. Die beiden Lagerschalenhälften 1.1, 1.2 sind beispielsweise über Verschraubungen 9 miteinander verschraubt.

In Radialrichtung der Lagerschale 1 sind drei Ölbohrungen 10 eingebracht, welche eine ölleitende Verbindung zwischen dem äußeren Umfang 3 und der Lagerfläche 2 herstellen. Die Mündung jeder Ölbohrung 10 in der Lagerfläche 2 ist von einer Schmiertasche 11 umschlossen, die als Aussparung in die Lagerfläche 2 eingebracht ist. Auf dem äußeren Umfang 3 münden die Ölbohrungen 10 im Ringkanal 4.

Im gezeigten Ausführungsbeispiel ist eine Vielzahl von Kühlölbohrungen 20 in die Lagerschale 1 eingebracht, insbesondere im Bereich der höchsten Lagerlast, zum Beispiel dort, wo auch die Ölbohrung 10 der unteren Lagerschalenhälfte 1.2 vorgesehen ist. Jedoch sind solche Kühlölbohrungen 20 auch in anderen Umfangsabschnitten der Lagerschale 1 möglich, beispielsweise auch in der ersten Lagerschalenhälfte 1.1. Zur Verdeutlichung sind dort Kühlölbohrungen 20 in gestrichelten Linien eingezeichnet, wobei hier auch der Beginn beziehungsweise der Einlass der Kühlölbohrungen 20 im Ringkanal 4 ersichtlich ist. Vorteilhaft münden die Kühlölbohrungen 20 stirnseitig in der Lagerschale 1 beziehungsweise den entsprechenden Lagerschalenhälften 1.1 und 1.2.

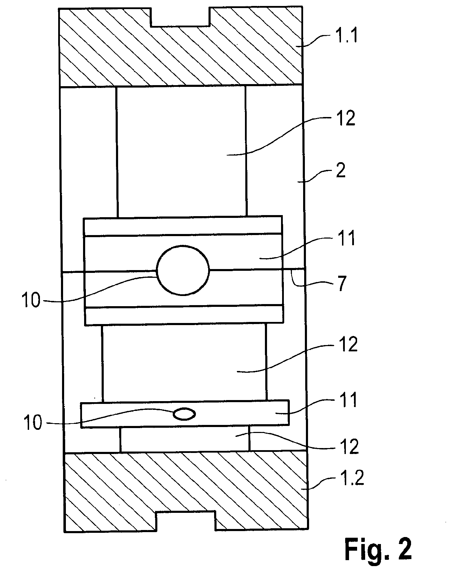

In der Figur 2 ist eine Draufsicht von innen auf die Lagerfläche 2 dargestellt. Neben den auch in der Figur 1 ersichtlichen Schmiertaschen 11 mit den Ölbohrungen 10 erkennt man in die Lagerfläche 2 eingebrachte Ölnuten 12, die sich in Umfangsrichtung über einen Teil der Breite (welche der Axialrichtung des Lagers entspricht) erstrecken. Die Ölnuten 12 können relativ zueinander eine verschiedene Breite aufweisen und/oder relativ zu den Schmiertaschen 11. Dies ist jedoch nicht zwingend. Die Ölnuten 12 können sich ausgehend jeweils von einer ersten Schmiertasche 11 bis zu einer zweiten Schmiertasche 11 erstrecken, was jedoch ebenfalls nicht zwingend ist. Die Ölbohrungen 10 können insbesondere verschiedene Durchmesser aufweisen, beispielsweise weisen die Ölbohrungen 10, die innerhalb der Teilfuge 7 positioniert sind, einen größeren Durchmesser als die verbleibende Ölbohrung 10 auf, die dann jedoch insbesondere in einer Schmiertasche 11 mit der vergleichsweise größten axialen Breite mündet. Zwischen dieser Schmiertasche 11 und der in Umfangsrichtung in Drehrichtung der Welle 6 folgenden Schmiertasche 11 ist insbesondere die vergleichsweise breiteste Ölnut 12 vorgesehen, so wie beispielhaft in der Figur 2 dargestellt ist.

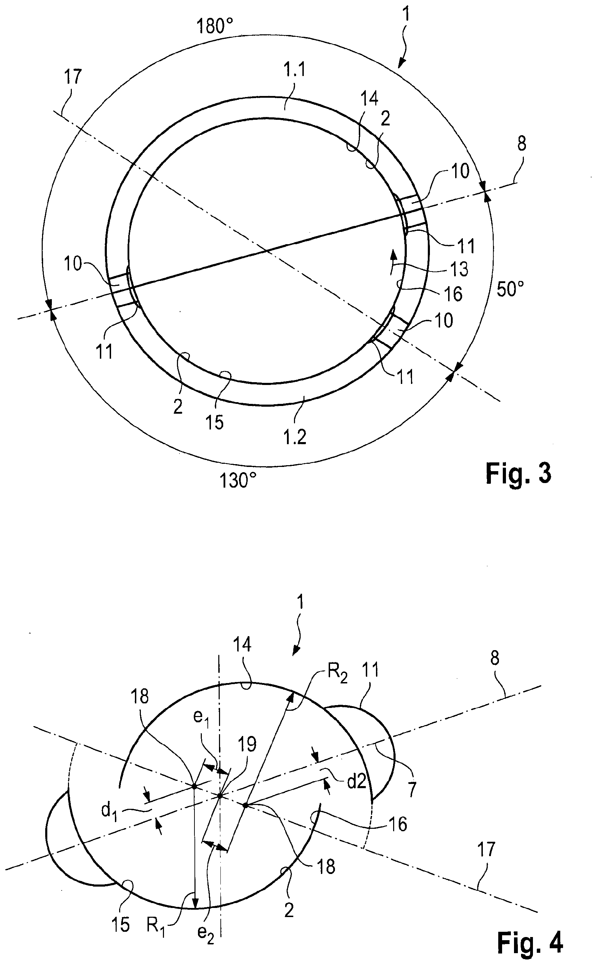

Wie man aus der Figur 3 in Zusammenschau mit der Figur 2 erkennen kann, ist diese vergleichsweise breiteste Schmiertasche 12 beispielsweise in Drehrichtung der Welle 6 (Figur 1) gesehen, die in der Figur 3 mit dem Pfeil 13 angedeutet wird, vor beziehungsweise zu Beginn des kleinsten Flächensegments positioniert, welches vorliegend als drittes Flächensegment 16 bezeichnet wird. Dieses dritte Flächensegment 16 weist beispielsweise, wie in der Figur 3 dargestellt ist, einen Umfangswinkel von 50° auf. Dem dritten Flächensegment 13 folgt in Drehrichtung 13 der Welle 6 (in der Figur 1 dargestellt) ein erstes Flächensegment 14, das sich in dem gezeigten Ausführungsbeispiel über einen Umfangswinkel von 180° erstreckt, und ein zweites Flächensegment 15, das sich in dem gezeigten Ausführungsbeispiel über einen Umfangswinkel von 130° erstreckt.

Bei dem hier dargestellten Ausführungsbeispiel wird die gesamte erste Lagerschalenhälfte 1.1 auf der Lagerfläche 2 durch das erste Flächensegment 14 gebildet. Die Lagerfläche 2 der zweiten Lagerschalenhälfte 1.2 wird hingegen durch das zweite Flächensegment 15 und das dritte Flächensegment 16 gebildet.

Beachtlich in dem gezeigten Ausführungsbeispiel ist, dass eine Versatzebene 17, auf welche anhand der Figur 4 noch näher eingegangen wird, winklig zur Teilfugenebene 8 positioniert ist, insbesondere 10° oder 20° bis 60° hierzu geneigt.

Die in der Figur 3 dargestellte, im Betrieb weniger belastete erste Lagerschalenhälfte 1.1 ist niedriger profiliert ist als die zweite Lagerschalenhälfte 1.2, was bedeutet, dass der Flächensegmentradius (Radius des durch das Flächensegment ausgebildete Kreissegments) deutlich größer als der Bezugsradius ist, der beispielsweise durch den Außenradius der Welle 6 oder durch den Radius eines theoretisch in die Lagerfläche 2 eingepassten Kreisrings definiert wird. Beispielsweise ist die weniger belastete Lagerschalenhälfte dreibis fünfmal stärker profiliert als die vergleichsweise höher belastete Lagerschalenhälfte.

In der Figur 4 ist nochmals die Teilfuge 7 mit der Teilfugenebene 8 und den beiden nicht maßstäblich dargestellten Schmiertaschen 11 in der Teilfugenebene 8 dargestellt. Ferner ist der Radius R der Flächensegmente beziehungsweise des durch diese auf der Innenseite gebildeten Kreissegments eingetragen. Der Radius eines Flächensegments beziehungsweise der Flächensegmente 15, 16 ist mit R₁ bezeichnet, der Radius des anderen Flächensegments mit R₂. Der Mittelpunkt des jeweiligen Kreissegments (beider Lagerschalenhälften 1.1, 1.2, siehe die Figur 3), welcher mit 18 beziffert ist, ist um eine Exzentrizität d gegenüber dem Mittelpunkt 19 der Lagerschale 1 und damit auch gegenüber der Teilfugenebene 8 verschoben. Zugleich ist jeder Mittelpunkt 18 der Kreissegmente des Flächensegments 14 beziehungsweise gemeinsam gebildet durch das zweite und das dritte Flächensegment 15, 16 um einen Versatz e relativ zu dem Mittelpunkt 19 der Lagerschale 1 verschoben, und zwar innerhalb der Versatzebene 17. Entsprechend der Radien R₁, R₂ ist auch der Versatz der Flächensegmente 15, 16 mit e₁ und der Versatz des Flächensegments 14 mit e₂ bezeichnet. Ebenso sind die Exzentrizität d₁ des zweiten und dritten Flächensegments 15, 16 und die Exzentrizität d₂ des ersten Flächensegments 14 beziffert.

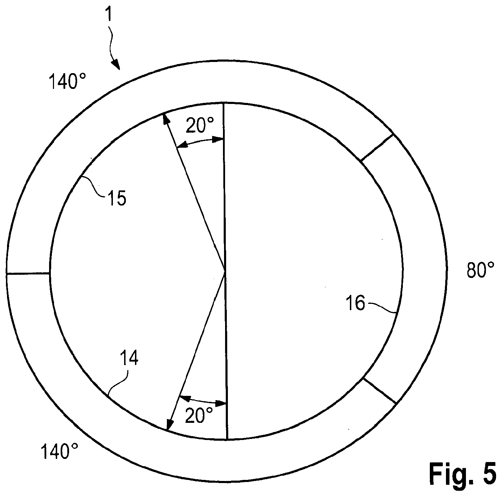

In der Figur 5 ist ein weiteres Ausführungsbeispiel für ein erfindungsgemäßes hydrodynamisches Gleitlager schematisch dargestellt. Bei diesem Ausführungsbeispiel sind ebenfalls drei in Umfangsrichtung der Lagerschale 1 hintereinander angeordnete, mit ihrem inneren Umfang jeweils ein Kreissegment ausbildende Flächensegmente 14, 15, 16 vorgesehen, wobei abweichend vom vorherigen Ausführungsbeispiel sich zwei Flächensegmente 14, 15 über jeweils 140° erstrecken und das verbleibende Flächensegment 16 sich über 80° erstreckt. Insbesondere sind die sich über 140° erstreckenden Flächensegmente 14, 15 kleiner profiliert als das sich über 80° erstreckende Flächensegment 16. Somit ist es möglich, dass die sich über den größeren Winkel erstreckenden Flächensegmente 14, 15 eine höhere Tragkraft aufweisen als das verbleibende Flächensegment 16, das jedoch besonders zur Stabilität des Lagers beiträgt. Das Lager ist insbesondere für alle Betriebspunkte geeignet, sodass kein Lagerwechsel erforderlich ist. Optional können vorteilhaft Ölbohrungen beziehungsweise Kühlbohrungen in den sich über 140° erstreckenden Flächensegmenten 14, 15 vorgesehen sein, selbstverständlich jedoch zusätzlich oder alternativ auch in dem verbleibenden Flächensegment 16.

In dem gezeigten Ausführungsbeispiel sind zwei Hauptlastrichtungen eingetragen, die um 20° gegenüber einer Senkrechten winklig versetzt angeordnet sind. Jedoch könnten auch andere Hauptlastrichtungen vorgesehen sein. Das Lager ist insbesondere für beide Drehrichtungen gleichermaßen geeignet und kann beispielsweise als Lager für ein Stirnradgetriebe vorgesehen sein, wobei ein Ritzel und/oder ein Rad, die miteinander kämmen, angetrieben sein können.

Die Teilfuge ist in dem gezeigten Ausführungsbeispiel nicht im Einzelnen gezeigt.

## Patentansprüche

1. Hydrodynamisches Gleitlager
1.1 mit einer Lagerschale (1), deren innere Oberfläche eine Lagerfläche (2) für eine umlaufende Welle (6) oder dergleichen bildet, wobei
1.2 die Lagerfläche (2) eine Vielzahl von in Umfangsrichtung der Lagerschale (1) hintereinander angeordnete, voneinander getrennte Flächensegmente (14, 15, 16) aufweist;
**dadurch gekennzeichnet, dass**
1.3 zumindest die Lagerfläche (2) oder die gesamte Lagerschale (1) aus CuCr1Zr hergestellt ist.

2. Hydrodynamisches Gleitlager gemäß Anspruch 1, **dadurch gekennzeichnet, dass** der Anteil von Cr 0,5 -1,2 Gew.-%, der Anteil von Zr 0,03 - 0,3 Gew.-% beträgt, insbesondere Beimengungen anderer Stoffe von maximal 0,2 Gew.-% vorgesehen sind, und Cu den restlichen Anteil bildet.

3. Hydrodynamisches Gleitlager gemäß Anspruch 1, **dadurch gekennzeichnet, dass** zumindest die Lagerfläche (2) oder die gesamte Lagerschale (1) warmausgehärtet ist.

4. Hydrodynamisches Gleitlager gemäß einem der Ansprüche 1 bis 3, **dadurch gekennzeichnet, dass** zumindest die Lagerfläche (2) oder die gesamte Lagerschale (1) eine Wärmeleitfähigkeit von wenigstens 300 W / (m * K) aufweist, insbesondere bei 250° C oder weniger.

5. Hydrodynamisches Gleitlager gemäß einem der Ansprüche 1 bis 4, **dadurch gekennzeichnet, dass** die Lagerfläche (2) wenigstens drei oder genau drei Flächensegmente (14, 15, 16) aufweist, insbesondere mit verschiedenen Umfangswinkeln.

6. Hydrodynamisches Gleitlager gemäß Anspruch 5, **dadurch gekennzeichnet, dass** ein erstes Flächensegment (14) einen Umfangswinkel von 170° bis 190°, insbesondere von 180° aufweist, ein zweites Flächensegment (15) einen Umfangswinkel von 110° bis 140°, insbesondere von 130° oder 120° aufweist, und ein drittes Flächensegment (16) einen Umfangswinkel von 40° bis 70°, insbesondere von 50° oder 60° aufweist.

7. Hydrodynamisches Gleitlager gemäß einem der Ansprüche 5 oder 6, **dadurch gekennzeichnet, dass** die beiden Flächensegmente (15, 16) mit vergleichsweise kleinerem Umfangswinkel eine größere Profilierung als das verbleibende Flächensegment (14) aufweisen, wobei die Profilierung der beiden kleineren Flächensegmente (15, 16) insbesondere gleich ist.

8. Hydrodynamisches Gleitlager gemäß einem der Ansprüche 1 bis 7, **dadurch gekennzeichnet, dass** in der Lagerfläche (2) wenigstens eine sich in Umfangsrichtung erstreckende Ölnut (12) vorgesehen ist, die insbesondere nur über einen Teil des Umfangs oder nur über den Umfang eines Flächensegments (14, 15, 16) oder einen Teil des Umfangs eines Flächensegments (14, 15, 16) reicht.

9. Hydrodynamisches Gleitlager gemäß Anspruch 8, **dadurch gekennzeichnet, dass** die wenigstens eine Ölnut eine Breite zwischen 20 und 30 Prozent einer Breite der Lagerfläche (2) in Axialrichtung des Gleitlagers aufweist.

10. Hydrodynamisches Gleitlager gemäß einem der Ansprüche 1 bis 9, **dadurch gekennzeichnet, dass** über dem äußeren Umfang der Lagerschale (1) ein Ringkanal (4) zur Ölversorgung eingebracht ist, der über radiale Ölbohrungen (10) in ölleitender Verbindung mit der Lagerfläche (2) steht.

11. Hydrodynamisches Gleitlager gemäß Anspruch 10, **dadurch gekennzeichnet. dass** eine Mündung wenigstens einer Ölbohrung (10) oder aller Ölbohrungen (10) in der Lagerfläche (2) jeweils durch eine in die Lagerfläche (2) eingebrachten Schmiertasche (11) umschlossen wird.

12. Hydrodynamisches Gleitlager gemäß Anspruch 11, **dadurch gekennzeichnet dass**, die Schmiertaschen (11) in Axialrichtung des Lagers breiter als die wenigstens eine Ölnut (12) sind.

13. Hydrodynamisches Gleitlager gemäß einem der Ansprüche 11 oder 12, **dadurch gekennzeichnet, dass** eine Schmiertasche (11), die in Umfangsrichtung in Drehrichtung der Welle oder dergleichen gesehen vor dem Flächensegment (16) oder am Anfang des Flächensegments (16) mit dem kleinsten Umfangswinkel positioniert ist, in Axialrichtung des Lagers breiter als alle anderen Schmiertaschen (11) ist.

14. Hydrodynamisches Gleitlager gemäß einem der Ansprüche 1 bis 13, **dadurch gekennzeichnet, dass** die Flächensegmente über dem Umfang jeweils durch radiale Ölbohrungen (10) voneinander getrennt sind, die von einem äußeren Umfang (3) der Lagerschale (1) zu der Lagerfläche (2) reichen.

15. Hydrodynamisches Gleitlager gemäß einem der Ansprüche 1 bis 14, **dadurch gekennzeichnet, dass** in der Lagerschale (1) wenigstens eine Kühlbohrung (20) oder eine Vielzahl von Kühlbohrungen (20) vorgesehen ist, die zumindest teilweise in Axialrichtung der Lagerschale (1) verlaufen.

## Claims

1. Hydrodynamic plain bearing
1.1 having a bearing shell (1) whose inner surface forms a bearing surface (2) for a rotating shaft (6) or the like, wherein
1.2 the bearing surface (2) has a multiplicity of mutually separate surface segments (14, 15, 16) arranged in sequence in the circumferential direction of the bearing shell (1);
**characterized in that**
1.3 at least the bearing surface (2) or the entire bearing shell (1) is made of CuCr1Zr.

2. Hydrodynamic plain bearing according to Claim 1, **characterized in that** the proportion of Cr is 0.5-1.2 wt%, the proportion of Zr is 0.03-0.3 wt%, it being in particular provided that additional quantities of other materials are at most 0.2 wt%, and Cu forms the remainder.

3. Hydrodynamic plain bearing according to Claim 1, **characterized in that** at least the bearing surface (2) or the entire bearing shell (1) is artificially aged.

4. Hydrodynamic plain bearing according to one of Claims 1 to 3, **characterized in that** at least the bearing surface (2) or the entire bearing shell (1) has a thermal conductivity of at least 300 W/(m*K), in particular at 250°C or less.

5. Hydrodynamic plain bearing according to one of Claims 1 to 4, **characterized in that** the bearing surface (2) has at least three or exactly three surface segments (14, 15, 16), in particular with different circumferential angles.

6. Hydrodynamic plain bearing according to Claim 5, **characterized in that** a first surface segment (14) has a circumferential angle of 170° to 190°, in particular 180°, a second surface segment (15) has a circumferential angle of 110° to 140°, in particular 130° or 120°, and a third surface segment (16) has a circumferential angle of 40° to 70°, in particular 50° or 60°.

7. Hydrodynamic plain bearing according to one of Claims 5 and 6, **characterized in that** the two surface segments (15, 16) of comparatively small circumferential angle have greater profiling than the remaining surface segment (14), wherein the profiling of the two smaller surface segments (15, 16) is in particular equal.

8. Hydrodynamic plain bearing according to one of Claims 1 to 7, **characterized in that** in the bearing surface (2) there is provided at least one circumferential oil groove (12) which in particular extends only over part of the circumference or only over the circumference of a surface segment (14, 15, 16) or part of the circumference of a surface segment (14, 15, 16).

9. Hydrodynamic plain bearing according to Claim 8, **characterized in that** the at least one oil groove has a breadth of between 20 and 30 percent of a breadth of the bearing surface (2) in the axial direction of the plain bearing.

10. Hydrodynamic plain bearing according to one of Claims 1 to 9, **characterized in that** an annular channel (4) for oil supply is introduced over the outer circumference of the bearing shell (1), which channel is in oil-conveying connection, via radial oil bores (10), with the bearing surface (2) .

11. Hydrodynamic plain bearing according to Claim 10, **characterized in that** an opening of at least one oil bore (10) or all of the oil bores (10) in the bearing surface (2) is in each case surrounded by a lubrication pocket (11) introduced into the bearing surface (2).

12. Hydrodynamic plain bearing according to Claim 11, **characterized in that** the lubrication pockets (11) are broader in the axial direction of the bearing than the at least one oil groove (12).

13. Hydrodynamic plain bearing according to one of Claims 11 and 12, **characterized in that** a lubrication pocket (11) which is positioned before the surface segment (16), or at the beginning of the surface segment (16) with the smallest circumferential angle, in the circumferential direction, as seen in the direction of rotation of the shaft or the like, is broader than all other lubrication pockets (11) in the axial direction of the bearing.

14. Hydrodynamic plain bearing according to one of Claims 1 to 13, **characterized in that** the surface segments are in each case separated from one another over the circumference by radial oil bores (10) which extend from an outer circumference (3) of the bearing shell (1) to the bearing surface (2) .

15. Hydrodynamic plain bearing according to one of Claims 1 to 14, **characterized in that** in the bearing shell (1) there is provided at least one cooling bore (20) or a multiplicity of cooling bores (20) which extend at least partially in the axial direction of the bearing shell (1).

## Revendications

1. Palier lisse hydrodynamique
1.1 comprenant une coque de palier (1) dont la surface intérieure forme une surface de palier (2) pour un arbre rotatif (6) ou similaire,
1.2 la surface de palier (2) présentant une pluralité de segments de surface (14, 15, 16) séparés les uns des autres, disposés les uns derrière les autres dans la direction périphérique de la coque de palier (1) ;
**caractérisé en ce qu'**
1.3 au moins la surface de palier (2) ou l'ensemble de la coque de palier (1) est fabriqué(e) en CuCr1Zr.

2. Palier lisse hydrodynamique selon la revendication 1, **caractérisé en ce que** la proportion de Cr est de 0,5 - 1,2 % en poids, la proportion de Zr est de 0,03 - 0,3 % en poids, en particulier des adjonctions d'autres substances de 0,2 % en poids au maximum étant prévues, et la proportion restante étant du Cu.

3. Palier lisse hydrodynamique selon la revendication 1, **caractérisé en ce qu'**au moins la surface de palier (2) ou l'ensemble de la coque de palier (1) est durci(e) à la chaleur.

4. Palier lisse hydrodynamique selon l'une quelconque des revendications 1 à 3, **caractérisé en ce qu'**au moins la surface de palier (2) ou l'ensemble de la coque de palier (1) présente une conductibilité thermique d'au moins 300 W / (m*K), en particulier à 250°C ou moins.

5. Palier lisse hydrodynamique selon l'une quelconque des revendications 1 à 4, **caractérisé en ce que** la surface de palier (2) présente au moins trois ou exactement trois segments de surface (14, 15, 16), en particulier avec des angles périphériques différents.

6. Palier lisse hydrodynamique selon la revendication 5, **caractérisé en ce qu'**un premier segment de surface (14) présente un angle périphérique de 170° à 190°, en particulier de 180°, un deuxième segment de surface (15) présente un angle périphérique de 110° à 140°, en particulier de 130° ou de 120°, et un troisième segment de surface (16) présente un angle périphérique de 40° à 70°, en particulier de 50° ou de 60°.

7. Palier lisse hydrodynamique selon l'une quelconque des revendications 5 ou 6, **caractérisé en ce que** les deux segments de surface (15, 16) présentent, avec un angle périphérique relativement petit, un plus grand profilage que le segment de surface restant (14), le profilage des deux plus petits segments de surface (15, 16) étant en particulier identique.

8. Palier lisse hydrodynamique selon l'une quelconque des revendications 1 à 7, **caractérisé en ce que** dans la surface de palier (2) est prévue au moins une rainure d'huile (12) s'étendant dans la direction périphérique, laquelle s'étend notamment seulement sur une partie de la périphérie ou seulement sur la périphérie d'un segment de surface (14, 15, 16) ou sur une partie de la périphérie d'un segment de surface (14, 15, 16).

9. Palier lisse hydrodynamique selon la revendication 8, **caractérisé en ce que** l'au moins une rainure d'huile présente une largeur comprise entre 20 et 30 pour cent d'une largeur de la surface de palier (2) dans la direction axiale du palier lisse.

10. Palier lisse hydrodynamique selon l'une quelconque des revendications 1 à 9, **caractérisé en ce que** sur la périphérie extérieure de la coque de palier (1) est réalisé un canal annulaire (4) pour l'alimentation en huile, lequel est en liaison de conduction d'huile avec la surface de palier (2) par le biais d'alésages d'huile radiaux (10).

11. Palier lisse hydrodynamique selon la revendication 10, **caractérisé en ce qu'**une embouchure d'au moins un alésage d'huile (10) ou de tous les alésages d'huile (10) dans la surface de palier (2) est à chaque fois entourée par une cavité de lubrification (11) réalisée dans la surface de palier (2).

12. Palier lisse hydrodynamique selon la revendication 11, **caractérisé en ce que** les cavités de lubrification (11) dans la direction axiale du palier sont plus larges que l'au moins une rainure d'huile (12).

13. Palier lisse hydrodynamique selon l'une quelconque des revendications 11 ou 12, **caractérisé en ce qu'**une cavité de lubrification (11) qui, vue dans la direction périphérique dans le sens de rotation de l'arbre ou similaire, est positionnée avant le segment de surface (16) ou au début du segment de surface (16) avec le plus petit angle périphérique, est plus large dans la direction axiale du palier que toutes les autres cavités de lubrification (11).

14. Palier lisse hydrodynamique selon l'une quelconque des revendications 1 à 13, **caractérisé en ce que** les segments de surface sont à chaque fois séparés les uns des autres sur la périphérie par des alésages d'huile radiaux (10) qui s'étendent depuis une périphérie extérieure (3) de la coque de palier (1) jusqu'à la surface de palier (2).

15. Palier lisse hydrodynamique selon l'une quelconque des revendications 1 à 14, **caractérisé en ce qu'**au moins un alésage de refroidissement (20) ou une pluralité d'alésages de refroidissement (20) sont prévus dans la coque de palier (1), lesquels s'étendent au moins en partie dans la direction axiale de la coque de palier (1).
